# EUROPÄISCHE PATENTSCHRIFT

(11) **EP 4 371 720 B1**
(45) Veröffentlichungstag und Bekanntmachung des Hinweises auf die Patenterteilung: **16.07.2025**
(21) Anmeldenummer: 23188574.0
(22) Anmeldetag: 31.07.2023
(51) Int. Cl.: B27M 3/18, B23Q 1/01, B23Q 1/56, B27C 3/04, B27C 5/06, B27M 1/08

(54) **HOLZBEARBEITUNGSVORRICHTUNG UND VERFAHREN ZUM BETRIEB EINER SOLCHEN**
WOODWORKING DEVICE AND METHOD FOR OPERATING SAME
DISPOSITIF DE TRAITEMENT DU BOIS ET PROCÉDÉ DE FONCTIONNEMENT D'UN TEL DISPOSITIF

(30) Priorität: 16.11.2022 DE 102022130351
(43) Veröffentlichungstag der Anmeldung: 22.05.2024
(73) Patentinhaber: IMA Schelling Deutschland GmbH, 32312 Lübbecke (DE)
(72) Erfinder: Altehoff, Bernd, 49324 Melle (DE)
(74) Vertreter: Schober, Mirko

(56) Entgegenhaltungen:
- EP-B1- 0 993 903
- DE-B4- 10 244 838

## Beschreibung

Die Erfindung betrifft eine Holzbearbeitungsvorrichtung nach dem Oberbegriff des Anspruchs 1 sowie ein Verfahren zum Betrieb einer solchen.

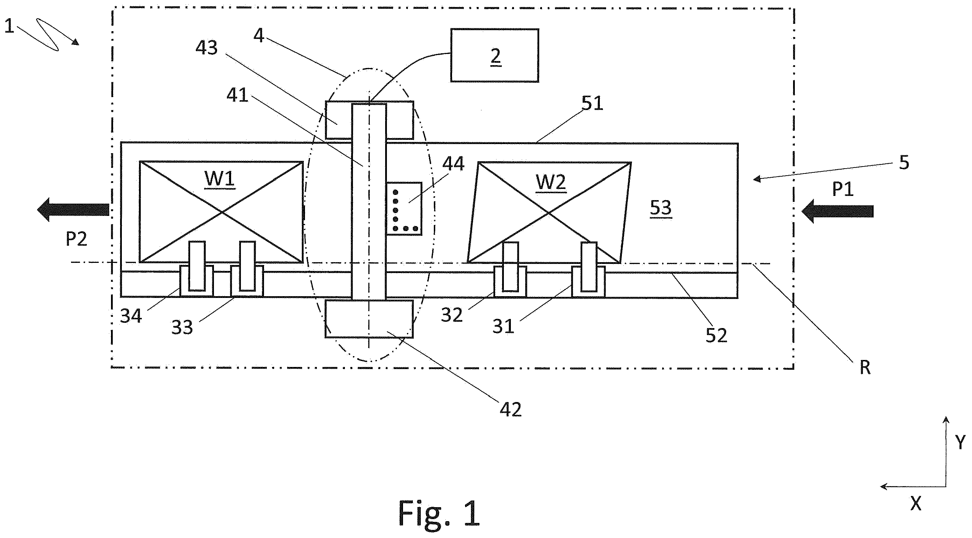

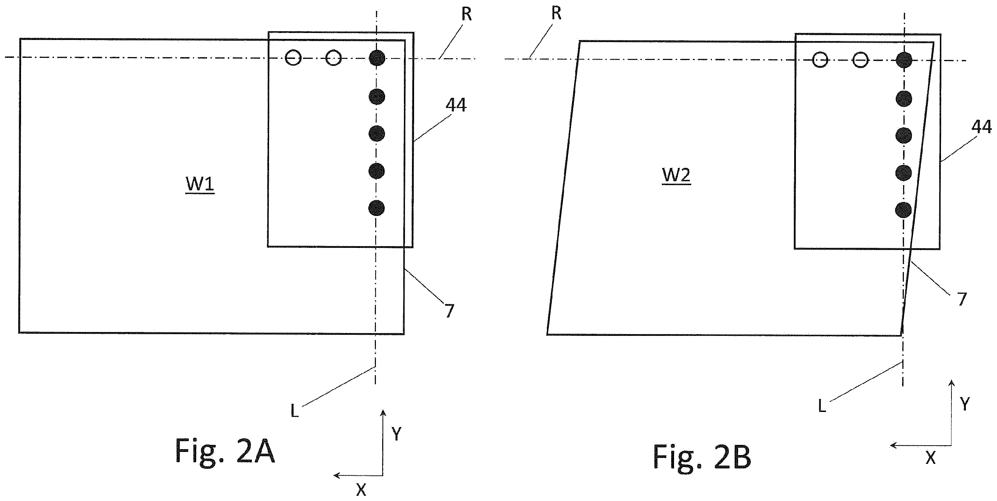

Bei bekannten Holzbearbeitungseinrichtungen 1, wie sie beispielsweise in Figur 1 dargestellt und z. B. aus EP 3 281 755 A1 bekannt sind, werden Bearbeitungsköpfe eingesetzt. Das können sogenannte Bohrköpfe 44 mit einer Mehrzahl Bohrer sein, die ein bestimmtes Bohrmuster in ein Werkstück einbringen. Bearbeitungsköpfe im Sinne der Erfindung können aber auch Sägeköpfe mit einer Nutensäge sein, die in der Lage ist, eine Nut in das Werkstück einzubringen. Sofern im Folgenden von einem Bohrkopf oder Bohrungen die Rede ist, gelten diese Ausführungen sinngemäß auch für einen Bearbeitungskopf allgemein und vor allem auch einen solchen in Gestalt eines Sägekopfes sowie die durch Sägen in das Werkstück eingebrachte Nuten. Im gezeigten Beispiel ist der Bohrkopf 44 an einer Supporttraverse 41 einer Bohrkopftragvorrichtung 4 in Y-Richtung verschieblich gelagert. Die Werkstücke W1, W2 werden an einer Referenzlinie R ausgerichtet und in Richtung X in einer Werkstücktransportebene 53 vorgeschoben, wobei sie bei P1 aufgegeben und bei P2 ausgeschleust werden. Im gezeigten Beispiel liegt die Werkstücktransportebene parallel zum Boden, auf dem die Holzbearbeitungsvorrichtung 1 aufgestellt ist. Es gibt aber auch Vertikalmaschinen, bei denen die Transportebene 53 vertikal zum Boden verläuft. Die plattenförmigen Werkstücke W1 und W2 werden dann mit ihren Flächenseiten senkrecht zum Boden transportiert. Zum Vorschub der Werkstücke W1, W2 dient eine Transportvorrichtung, die im gezeigten Beispiel durch die in Richtung X beweglichen Greifer 31 - 34 dargestellt ist. Die Supporttraverse 41 überspannt eine Unterstützungsvorrichtung 5, die beispielsweise als Tisch ausgebildet sein kann, zwischen den beiden Längsseiten 51 und 52 der Transportebene 53. Die Supporttraverse 41 ist ihrerseits auf einer Lagerung 42, 43 gelagert, die bevorzugt in bzw. entgegen der Vorschubrichtung X beweglich ist, sodass die Supporttraverse eine Bewegung in Richtung X ausführen kann. Über eine Steuerung 2 wird ein einlaufendes Werkstück W1, W2 mittels des an der Supporttraverse 41 gelagerten Bohrkopfes 44 bearbeitet, wobei Bohrmuster entstehen, wie sie beispielsweise in den Figuren 2A bis 3B dargestellt sind.

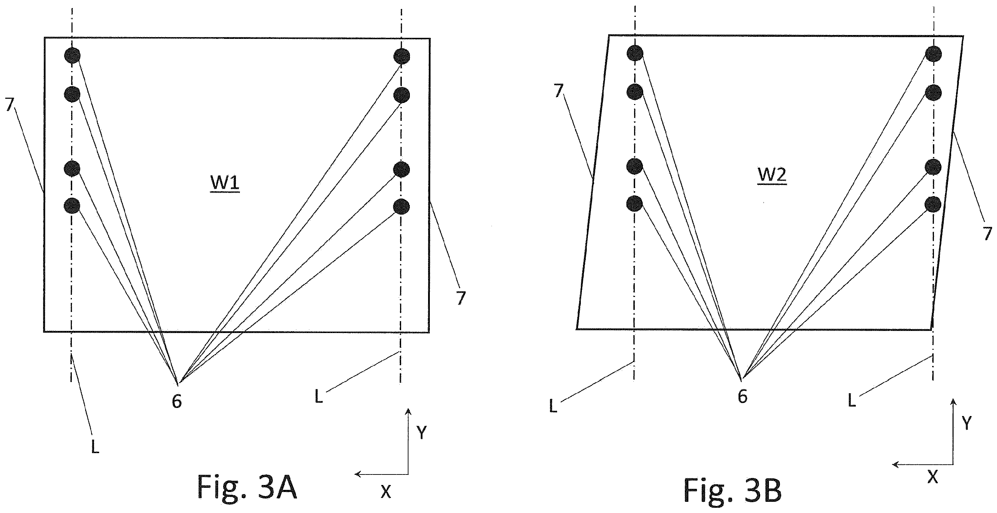

In Figur 2A ist das Anordnen des Bohrkopfes 44 über einem Werkstück W1 gezeigt. Im gezeigten Beispiel werden fünf in Y-Richtung übereinander angeordnete Bohrungen (schwarze Punkte) in das Werkstück W1 eingebracht, diese liegen auf einer Referenzlinie R in einem definierten Abstand von der nachlaufenden Kante 7 des Werkstücks W1. In Figur 3A ist ein fertig bearbeitetes Werkstück W1 dargestellt, bei dem sowohl im Bereich der nachlaufenden Kante als auch im Bereich der vorauslaufenden Kante ein entsprechendes Bohrbild mit 4 vier übereinander liegenden Bohrungen dargestellt ist.

Problematischer wird es allerdings, wenn die Kanten 7 des Werkstücks W2 zur Vorschubrichtung X einen Winkel ungleich 90° einnehmen. Diese leichte Schrägstellung ist insbesondere in den Figuren 2B und 3B dargestellt. In einem solchen Fall würde die Verwendung der in Figur 1 dargestellten Vorrichtung dazu führen, dass - wie in Figur 3B gezeigt - zwar bezogen auf die Vorschubrichtung X und die Querrichtung Y alle Bohrungen auf einer Linie L liegen, allerdings variiert der Abstand zur Kante. Die geschildeten Probleme gelten sinngemäß auch bei durch Sägeköpfe bzw. Nutsägen in das Werkstück eingebrachte Nuten. Die genannten Probleme lassen sich auch dadurch nicht lösen, indem das fragliche Aggregat selbst schwenkbar gelagert ist, wie es beispielsweise aus EP 0 608 746 B1, EP 0 933 903 B1, DE 102 44 838 B4 oder WO 94/04309 A1 bekannt ist. Bei den bekannten Einrichtungen wird ein Bohraggregat oder eine Säge schwenkbar an einer Supporttraverse eines Portals gelagert, so dass das Aggregat gegenüber der Supporttraverse gedreht werden kann. Bei dieser Konfiguration ist es aber nicht möglich, einen Mehrfachbohrkopf oder eine Nutensäge zu einer schräggestellten Kante des Werkstücks auszurichten. Ein zur Transportrichtung auf diese Weise schräg angestelltes Sägeblatt würde dann beim Führen der Säge in Richtung der Längserstreckung der Supporttraverse nicht in der Lage sein, einen Sägeschnitt parallel zur Schrägkante des Werkstücks auszuführen, weil das Aggregat nicht parallel zur Werkstückkante geführt würde. Auch bei einem Mehrfachbohrkopf entsteht dieses Problem, weil sich durch die Verschiebung des Mehrfachbohrkopfes senkrecht zur Vorschubrichtung der Abstand des Bohrbildes von der Kante über die Querrichtung des Werkstücks verändern würde. EP 0993 903 B offenbart eine Holzbearbeitungsvorrichtung mit einem Bearbeitungskopf, einer Unterstützungsvorrichtung, welche zur Unterstützung der Werkstücke ausgebildet ist, einer Bearbeitungskopftragvorrichtung, mit einer die zumindest einen Teil der Werkstückebene der Unterstützungsvorrichtung, überspannenden Supporttraverse, an welcher der wenigstens eine Bearbeitungskopf angeordnet ist, wobei die Supporttraverse um eine senkrecht zur Vorschubrichtung des Werkstücks verlaufende reale oder imaginäre Schwenkachse schwenkbar gelagert ist.

Aufgabe der vorliegenden Erfindung ist es daher, eine Holzbearbeitungsvorrichtung der eingangs genannten Art dahingehend weiterzuentwickeln, dass sich auch in Werkstücke mit relativ zur Vorschubrichtung schräg verlaufenden Kanten Bohrbilder oder Nuten einbringen lassen, bei denen die Bohrungen oder Nuten einen definierten konstanten Abstand zur vorlaufenden bzw. nachlaufenden Kante aufweisen.

Gelöst wird diese Aufgabe durch eine Holzbearbeitungsvorrichtung mit den Merkmalen des Anspruchs 1 sowie ein Verfahren mit den Merkmalen des Anspruchs 11. Vorteilhafte Ausführungsformen finden sich in den Unteransprüchen.

Die erfindungsgemäße Holzbearbeitungsvorrichtung dient zum Bearbeiten von plattenförmigen Werkstücken aus Holz oder Holzersatzstoffen und weist wenigstens einen Bearbeitungskopf auf. Dieser kann ein Bohrkopf mit einer Mehrzahl Bohrwerkzeuge zum gleichzeitigen Einbringen von einer Mehrzahl Bohrungen in ein Werkstück oder ein Sägekopf mit einer Nutensäge zum Einbringen einer Nut in ein Werkstück (W1, W2) sein. Ferner ist eine Unterstützungsvorrichtung, bevorzugt ein Tisch, vorhanden, welche zur Unterstützung der Werkstücke ausgebildet ist. Ferner verfügt die Holzbearbeitungsvorrichtung über eine Transporteinrichtung, bei der es sich beispielsweise um ein Transportband, linear verschiebliche Greifer oder Sauger, oder eine Transportkette handeln kann. Die Transporteinrichtung bewegt die Werkstücke an oder auf der Unterstützungsvorrichtung entlang der Vorschubrichtung in einer Werkstücktransportebene. Diese Werkstücktransportebene verläuft bei der Ausbildung der erfindungsgemäßen Holzbearbeitungsvorrichtung als Vertikalmaschine in der Regel senkrecht oder annähernd senkrecht zum Boden, z. B. um einen Winkel von 0 bis 30° gegenüber der Vertikalen gekippt, während es aber beispielsweise in einer anderen Ausführung der Holzbearbeitungsvorrichtung auch möglich ist, die Holzbearbeitungsvorrichtung so auszubilden, dass die Transportebene parallel zum Boden verläuft.

Zudem verfügt die Holzbearbeitungsvorrichtung über eine Bearbeitungskopftragvorrichtung, bevorzugt ein Portal. Diese Bearbeitungskopftragvorrichtung weist eine zumindest einen Teil der Werkstücktransportebene der Unterstützungsvorrichtung, bevorzugt in einer Richtung quer zur Vorschubrichtung, überspannende Supporttraverse auf, an welcher der wenigstens eine Bearbeitungskopf angeordnet ist. Der Bearbeitungskopf verfügt bevorzugt über eine Mehrzahl Bohrer, mit denen im Werkstück ein vorgegebenes Bohrbild erstellt werden kann oder - wie angedeutet - über eine Nutensäge zum Einbringen einer Nut in das Werkstück. Überspannen von wenigstens einem Teil der Werkstücktransportebene bedeutet, dass die Supporttraverse eine Länge haben muss, die es ermöglicht, dass der Bearbeitungskopf über die gesamte räumliche Ausdehnung der zu bearbeitenden Werkstücke verfahrbar sein muss. Anders ausgedrückt, der Bearbeitungskopf sollte die gesamte Flächenseite eines plattenförmigen Werkstücks erreichen können.

Erfindungsgemäß ist nun vorgesehen, dass die Supporttraverse um eine senkrecht zur Vorschubrichtung und senkrecht zur Werkstücktransportebene des Werkstücks verlaufende reale oder imaginäre Schwenkachse schwenkbar gelagert ist.

Auf diese Weise kann die Supporttraverse und damit letztlich auch der Bearbeitungskopf parallel zur Werkstücktransportebene verschwenkt werden. Insofern ist es möglich, das Bohrbild parallel zur Werkstücktransportebene zu drehen und somit an eine zur Transportrichtung schräg verlaufende Kante des Werkstücks anzupassen, sodass alle Bohrungen einen definierten Abstand von der Kante haben. Vorteilhafterweise kann die Supporttraverse hierzu gegenüber einer Nullstellung, in der die Hauptlängserstreckungsrichtung der Supporttraverse parallel zur Querrichtung und senkrecht zur Vorschubrichtung verläuft, in einer ersten Schwenkrichtung oder/und in einer der ersten Schwenkrichtung entgegengesetzten Schwenkrichtung um Winkel im Bereich von größer 0° bis 10°, bevorzugt bis 5°, äußerst bevorzugt bis 3° schwenkbar sein. In der Regel sind kleine Schwenkwinkel erforderlich, da es sich bei der Verschwenkung der Supporttraverse bevorzugt um eine Feineinstellung handelt.

Bevorzugt weist die Holzbearbeitungsvorrichtung dazu eine Steuerung auf, die dazu ausgelegt ist, wenigstens einen Antrieb oder eine Mehrzahl Antriebe anzusteuern, der das Verschwenken der Supporttraverse um die Schwenkachse bewirkt.

Vorteilhafterweise ist der Bearbeitungskopftragvorrichtung eine Werkstückerfassungseinrichtung vorgelagert, die die äußere Form eines einlaufenden Werkstücks, insbesondere den Winkel einer Schmalseite des Werkstücks zu einer vorgegebenen Referenzlinie erfasst. Ein einlaufendes Werkstück kann so vermessen werden, sodass die Steuerung dann mit diesen Informationen die Supporttraverse entsprechend verschwenken kann. Technisch kann das so umgesetzt werden, dass die Steuerung mit der Werkstückerfassungseinrichtung derart kommuniziert, dass die Werkstückerfassungseinrichtung die von ihr ermittelte äußere Form des Werkstücks in Form von Daten an die Steuerung weitergibt. Die Steuerung ermittelt im Ansprechen auf die so erhaltenen Daten einen entsprechenden Schwenkwinkel für die Supporttraverse und steuert den Antrieb so an, dass dieser das Verschwenken der Supporttraverse um die Schwenkachse um den zuvor ermittelten Schwenkwinkel bewirkt.

Natürlich ist es auch möglich, in der Steuerung vorab abgelegte Daten bezüglich der Maße und/oder Winkel zu einer Referenzlinie oder Referenzebene der einlaufenden Werkstücke zu verarbeiten und entsprechend eine Winkelstellung der Supporttraverse einzustellen.

Vorteilhafterweise ist der Bearbeitungskopf entlang der Supporttraverse verschieblich gelagert, sodass Bohrbilder oder Nuten an allen Positionen des Werkstücks nach entsprechender Vorgabe eingebracht werden können. Alternativ oder ergänzend hierzu kann insbesondere vorgesehen sein, dass der Bearbeitungskopf in Richtung der Werkstücktransportebene oder von dieser weg, insbesondere linear, verlagerbar ausgebildet ist. Alternativ oder ergänzend hierzu kann vorgesehen sein, dass die Supporttraverse an einem Maschinenbett der Holzbearbeitungsvorrichtung oder an dem Maschinenbett oder gegenüber einem Aufstellboden unverschieblich gelagerten Lagertraversen verschieblich gelagert ist. Die Erfindung eignet sich mithin auch für Vertikalmaschinen, bei denen die plattenförmigen Werkstücke aufrecht durch die Holzverarbeitungsvorrichtung geführt werden.

Nach einer weiteren bevorzugten Ausführungsform kann vorgesehen sein, dass die Supporttraverse eine Hauptlängserstreckungsrichtung aufweist, die so bemessen ist, dass die Supporttraverse die Unterstützungsvorrichtung, bevorzugt in einer Richtung quer zur Vorschubrichtung, zu mindestens 50%, bevorzugt zu 70%, äußerst bevorzugt vollständig, überspannt. In erster Linie kommt die Erfindung bei Portalmaschinen zum Einsatz, bei denen die Quertraverse des Portals gleichzeitig die Supporttraverse ist.

Weiter kann vorgesehen sein, dass der Bearbeitungskopf drehfest an der Supporttraverse gelagert ist. Im Gegensatz zu Vorrichtungen mit einem Schwenkkopf ist eine eigene Verschwenkung des Bearbeitungskopfes aufgrund der Schwenkbarkeit der Supporttraverse nicht erforderlich.

Die Supporttraverse kann auch unmittelbar an einem Maschinenbett der Holzbearbeitungsvorrichtung oder unmittelbar an am Maschinenbett oder einem Aufstellboden anordneten Lagern drehbar gelagert sein.

Die Erfindung betrifft ferner ein Verfahren zum Betrieb der oben beschriebenen Holzbearbeitungsvorrichtung, bei welchem folgende Schritte ausgeführt werden:
- Aufgeben eines Werkstücks und Übergeben desselben an die Unterstützungsvorrichtung, bevorzugt durch Ablegen auf einem Tisch der Unterstützungsvorrichtung;
- Ausrichten des Werkstücks relativ zu einer Referenzlinie;
- Einziehen des Werkstücks;
- Erfassen und/oder Auslesen von Daten betreffend die äußere Form des Werkstücks, insbesondere des Winkels wenigstens einer Seite des Werkstücks zur Referenzlinie;
- Transportieren des Werkstücks mittels der Transporteinrichtung in einer Vorschubrichtung (X) innerhalb einer Werkstücktransportebene zu der Bearbeitungskopftragvorrichtung;
- Einstellen eines Schwenkwinkels der Supporttraverse in Abhängigkeit von den zuvor ermittelten oder ausgelesenen Daten und
- Einbringen einer Mehrzahl Bohrungen entsprechend eines vorgegebenen Bohrmusters oder einer Nut in das Werkstück mittels des Bearbeitungskopfes.

Die Erfindung wird nachfolgend anhand von Ausführungsbeispielen mittels der Figuren 4 bis 6A näher erläutert.

Die Figuren 1 bis 3B veranschaulichen den oben beschriebenen Stand der Technik.
Figur 1 zeigt eine Draufsicht auf eine Holzbearbeitungsvorrichtung nach dem Stand der Technik.
Figur 2A zeigt eine Draufsicht auf ein plattenförmiges Werkstück mit zu einer Referenzlinie senkrechter Kante beim Erstellen eines Bohrbildes.
Figur 2B zeigt eine Draufsicht auf ein plattenförmiges Werkstück mit zu einer Referenzlinie nicht-senkrechter Kante beim Erstellen eines Bohrbildes.
Figur 3A zeigt eine Draufsicht auf ein plattenförmiges Werkstück mit zu einer Referenzlinie senkrechter Kante nach dem Erstellen eines Bohrbildes.
Figur 3B zeigt eine erste Draufsicht auf ein plattenförmiges Werkstück mit zu einer Referenzlinie nicht-senkrechter Kante nach dem Erstellen eines Bohrbildes.
Figur 4 zeigt eine Draufsicht auf eine Holzbearbeitungsmaschine nach einer ersten erfindungsgemäßen Ausführungsform.
Figur 5 zeigt eine Seitenansicht auf eine Holzbearbeitungsmaschine nach einer zweiten erfindungsgemäßen Ausführungsform.
Figur 6A zeigt eine Draufsicht auf ein plattenförmiges Werkstück mit zu einer Referenzlinie senkrechter Kante nach Erstellen eines Bohrbildes mittels einer erfindungsgemäßen Holzbearbeitungsmaschine.
Figur 6B zeigt eine Draufsicht auf ein plattenförmiges Werkstück mit zu einer Referenzlinie schräggestellten Kante nach Erstellen eines Bohrbildes mittels einer erfindungsgemäßen Holzbearbeitungsmaschine.

Zunächst wird darauf hingewiesen, dass zur Vermeidung von Wiederholungen die oben beschriebenen Bestandteile der erfindungsgemäßen Vorrichtung sowie die verwendeten Bezugszeichen der Figuren 1 bis 3B dieselbe Bedeutung haben wie auch bei der nachfolgenden Beschreibung der erfindungsgemäßen Ausführungsformen. Insofern gilt auch im Folgenden: Sofern von einem Bohrkopf oder Bohrungen die Rede ist, gelten diese Ausführungen sinngemäß auch für einen Bearbeitungskopf allgemein und vor allem auch einen solchen in Gestalt eines Sägekopfes sowie die durch Sägen in das Werkstück eingebrachte Nuten.

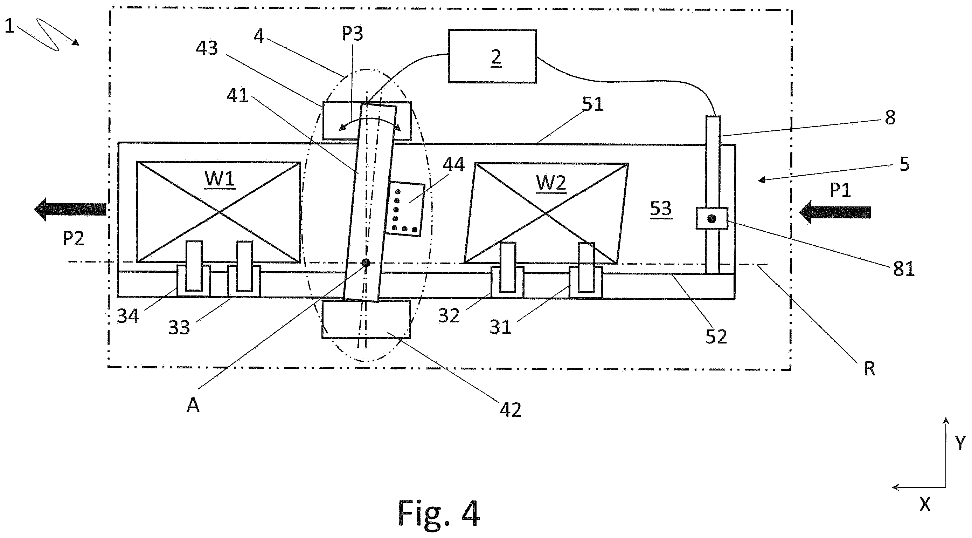

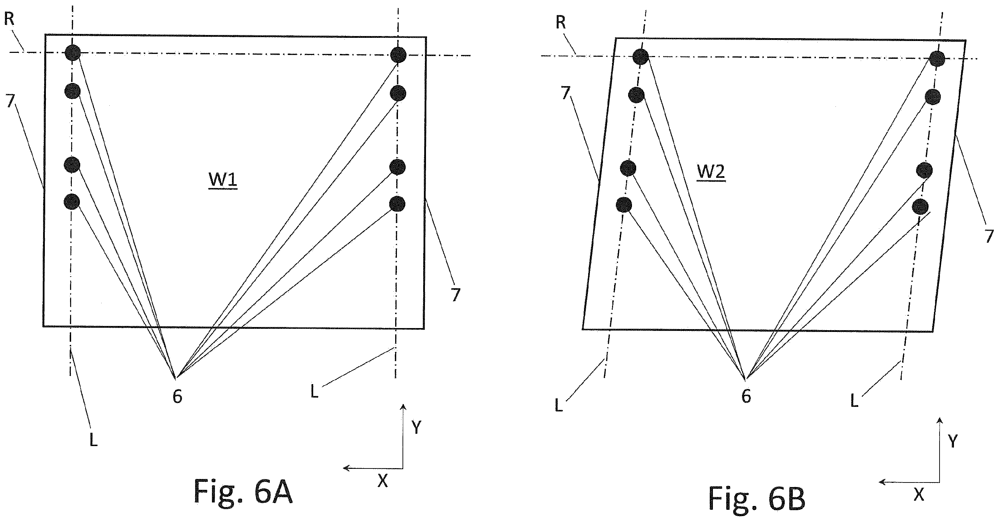

Eine erste erfindungsgemäße Ausführungsform der Holzbearbeitungsvorrichtung 1 ist in Fig. 4 gezeigt. Gezeigt ist eine klassische Bauform, bei der die Unterstützungsvorrichtung 5 im einfachsten Fall ein Tisch ist, auf welchem die Werkstücke W1 und W2 abgelegt und in Vorschubrichtung X in der Transportebene 53 bewegt werden. Insoweit zeigt Fig. 4 eine Draufsicht auf die Holzbearbeitungsvorrichtung 1. Ein Werkstück W1, W2 wird demnach in Richtung P1 zugeführt und auf den Tisch 5 aufgelegt und über in Vorschubrichtung X verschiebliche Transporteinrichtungen 31 - 34 (z. B. in Gestalt von Greifern oder Saugspannern) in Vorschubrichtung X in einer Werkstückebene 53 zu einer Bearbeitungskopftragvorrichtung 4 transportiert. Diese umfasst eine Supporttraverse 41, welche an den Lagern 42 und 43 gelagert ist und den bevorzugt parallel zur Supporttraverse 41 verschieblichen Bearbeitungskopf 44 trägt. Erfindungsgemäß lässt sich diese Supporttraverse 41 um die Achse A verschwenken, wie durch den Doppelpfeil P3 angedeutet ist. Der Bearbeitungskopftragvorrichtung 4 vorgelagert ist eine Werkstückerfassungseinrichtung 8, die mit der Steuerung 2 gekoppelt ist und bevorzugt eine Kamera oder einen Scanner 81 trägt, der ein einlaufendes Werkstück W1, W2 erfasst und insbesondere feststellt, ob vorauslaufende oder nachlaufende Kanten des Werkstücks einen Winkel zu einer Referenzlinie R aufweisen. Diese Informationen werden dann an die Steuerung 2 weitergegeben, die entsprechend dem Winkel zwischen einer Kante des Werkstücks W1, W2 die Supporttraverse 41 um die reale oder imaginäre Schwenkachse A verschwenkt. Damit wird auch der Bohrkopf 44 entsprechend verschwenkt, sodass sich das Bohrbild entsprechend anpasst. Entsprechend finden sich die aus dieser Vorgehensweise resultierenden Werkstücke in den Fig. 6A (senkrechte Kante 7) und 6B (zur Referenzlinie R schräg verlaufende Kanten 7). Mit der erfindungsgemäßen Holzbearbeitungsvorrichtung 1 kann also sichergestellt werden, dass aufgrund der verschwenkbaren Supporttraverse 41 die Bohrungen 6 auf den vorgegebenen Linien L liegen.

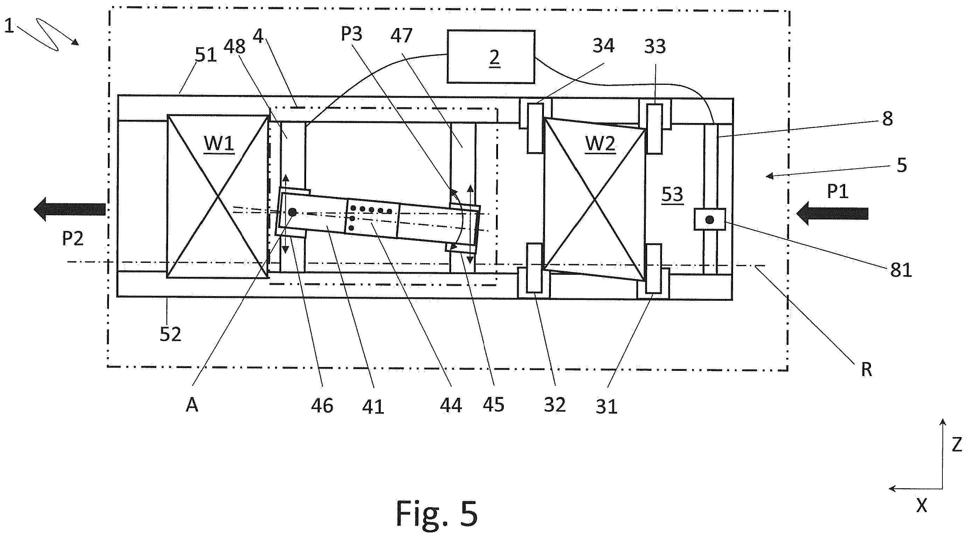

Entsprechend ist dies auch bei Vertikalmaschinen möglich, wie sie beispielsweise aus Fig. 5 erkennbar ist. Gezeigt ist also hier eine Seitenansicht einer weiteren Ausführungsform der erfindungsgemäßen Holzbearbeitungsvorrichtung 1. Die Werkstücke W1, W2 werden dabei mit ihren Flächenseiten senkrecht zum Boden in Vorschubrichtung transportiert. Entsprechend müssen die Transporteinrichtungen 31 - 34 für einen solchen Transport ausgelegt sein. Dies bedingt ebenso wie in dem Beispiel gemäß Fig. 4, dass die Supporttraverse 41 der Bohrkopftragvorrichtung 4, die ebenfalls um eine virtuelle oder imaginäre Schwenkachse A in Richtung des Pfeils P3 geschwenkt werden kann, in einer Ebene parallel zur Werkstücktransportebene 53 verschwenkbar sein muss. Im dargestellten Bespiel ist dies bevorzugt so realisiert, dass die Supporttraverse 41 auf in Richtung der geraden Doppelpfeile in Richtung Y verschieblichen Lagerabschnitten 45, 46 jeweils schwenkbar gelagert ist. Die Lagerabschnitte 45, 46, sind jeweils über die Steuerung 2 entlang der sich in Richtung Y erstreckenden Lagertraversen 47, 48 in Richtung Y verschieblich gelagert. Wenn sich die Lagerabschnitte 45, 46 über die Steuerung, bevorzugt unabhängig voneinander, verschieben lassen, kann jeder Punkt der Flächenseite des Werkstücks W1, W2 angefahren und durch den entlang der Supporttraverse 41 verschieblichen Bearbeitungskopf 44 bearbeitet werden. Zudem ist so eine entsprechend der Steuerung 2 vorgegebene Winkelstellung der Supporttraverse zur Referenzlinie einstellbar.

## Patentansprüche

1. Holzbearbeitungsvorrichtung (1) zum Bearbeiten von plattenförmigen Werkstücken (W1, W2) aus Holz oder Holzersatzstoffen, mit
wenigstens einem Bearbeitungskopf (44), wobei der Bearbeitungskopf ein Bohrkopf (44) mit einer Mehrzahl Bohrwerkzeuge zum gleichzeitigen Einbringen von einer Mehrzahl Bohrungen (6) in ein Werkstück (W1, W2) oder ein Sägekopf mit einer Nutensäge zum Einbringen einer Nut in ein Werkstück (W1, W2) ist,
einer Unterstützungsvorrichtung (5), bevorzugt ein Tisch (5), welche zur Unterstützung der Werkstücke (W1, W2) ausgebildet ist,
einer Transporteinrichtung (31 - 34), die die Werkstücke (W1, W2) an oder auf der Unterstützungsvorrichtung (5) entlang der Vorschubrichtung (X) in einer Werkstücktransportebene (53) bewegt,
einer Bearbeitungskopftragvorrichtung (4), bevorzugt ein Portal (4), mit einer die zumindest einen Teil der Werkstücktransportebene (53) der Unterstützungsvorrichtung (5), bevorzugt in einer Richtung (Y, Z) quer zur Vorschubrichtung, überspannenden Supporttraverse (41), an welcher der wenigstens eine Bearbeitungskopf (44) angeordnet ist,
wobei die Supporttraverse (41) um eine senkrecht zur Vorschubrichtung (X) und senkrecht zur Werkstücktransportebene (53) des Werkstücks (W1, W2) verlaufende reale oder imaginäre Schwenkachse (A) schwenkbar gelagert ist.

2. Holzbearbeitungsvorrichtung (1) nach Anspruch 1,
**dadurch gekennzeichnet,**
**dass** sie eine Steuerung (2) aufweist, die dazu ausgelegt ist, wenigstens einen Antrieb oder eine Mehrzahl Antriebe anzusteuern, der das Verschwenken der Supporttraverse (41) um die Schwenkachse (A) bewirkt.

3. Holzbearbeitungsvorrichtung (1) nach Anspruch 1 oder 2,
**dadurch gekennzeichnet,**
**dass** der Bearbeitungskopf (44) entlang der Supporttraverse (41) verschieblich gelagert ist oder/und die Supporttraverse (41) an einem Maschinenbett der Holzbearbeitungsvorrichtung (1) oder an dem Maschinenbett oder gegenüber einem Aufstellboden unverschieblich gelagerten Lagertraversen (47, 48) verschieblich gelagert ist.

4. Holzbearbeitungsvorrichtung (1) nach einem der vorigen Ansprüche,
**dadurch gekennzeichnet,**
**dass** die Supporttraverse (41) eine Hauptlängserstreckungsrichtung aufweist, die so bemessen ist, dass die Supporttraverse (41) die Unterstützungsvorrichtung (5), bevorzugt in einer Richtung (Y, Z) quer zur Vorschubrichtung, zu mindestens 50%, bevorzugt zu 70%, äußerst bevorzugt vollständig, überspannt.

5. Holzbearbeitungsvorrichtung (1) nach einem der vorigen Ansprüche,
**dadurch gekennzeichnet,**
**dass** der Bearbeitungskopftragvorrichtung (4) eine Werkstückerfassungseinrichtung (8) vorgelagert ist, die die äußere Form eines einlaufenden Werkstücks (W1, W2), insbesondere den Winkel einer Schmalseite (7) des Werkstücks (W1, W2) zu einer vorgegebenen Referenzlinie (R) erfasst.

6. Holzbearbeitungsvorrichtung (1) nach Anspruch 2 und 5,
**dadurch gekennzeichnet,**
**dass** die Steuerung (2) mit der Werkstückerfassungseinrichtung (8) derart kommuniziert, dass die Werkstückerfassungseinrichtung (8) die von ihr ermittelte äußere Form des Werkstücks (W1, W2) in Form von Daten an die Steuerung weitergibt und die Steuerung im Ansprechen auf die so erhaltenen Daten einen entsprechenden Schwenkwinkel für die Supporttraverse (41) ermittelt und den Antrieb so ansteuert, dass dieser das Verschwenken der Supporttraverse (41) um die Schwenkachse (A) um den zuvor ermittelten Schwenkwinkel bewirkt.

7. Holzbearbeitungsvorrichtung (1) nach einem der vorigen Ansprüche,
**dadurch gekennzeichnet,**
**dass** der Bearbeitungskopf (44) in Richtung der Werkstücktransportebene (53) oder von dieser weg, insbesondere linear, verlagerbar ausgebildet ist.

8. Holzbearbeitungsvorrichtung (1) nach einem der vorigen Ansprüche,
**dadurch gekennzeichnet,**
**dass** der Bearbeitungskopf (44) drehfest an der Supporttraverse (41) gelagert ist.

9. Holzbearbeitungsvorrichtung (1) nach einem der vorigen Ansprüche,
**dadurch gekennzeichnet,**
**dass** die Supporttraverse (41) unmittelbar an einem Maschinenbett der Holzbearbeitungsvorrichtung (1) oder unmittelbar an am Maschinenbett oder einem Aufstellboden anordneten Lagern drehbar gelagert ist.

10. Holzbearbeitungsvorrichtung (1) nach einem der vorigen Ansprüche,
**dadurch gekennzeichnet,**
**dass** die Supporttraverse (41) gegenüber einer Nullstellung, in der die Hauptlängserstreckungsrichtung der Supporttraverse (41) parallel zur Querrichtung (Y) und senkrecht zur Vorschubrichtung (X) verläuft, in einer ersten Schwenkrichtung oder/und in einer der ersten Schwenkrichtung entgegengesetzten zweiten Schwenkrichtung um Winkel im Bereich von größer 0° bis 10°, bevorzugt bis 5°, äußerst bevorzugt bis 3° schwenkbar ist.

11. Verfahren zum Betrieb einer Holzbearbeitungsvorrichtung (1) nach einem der vorigen Ansprüche,
**gekennzeichnet durch** folgende Schritte:
- Aufgeben eines Werkstücks (W1, W2) und Übergeben desselben an die Unterstützungsvorrichtung (5), bevorzugt durch Ablegen auf einem Tisch der Unterstützungsvorrichtung (5);
- Ausrichten des Werkstücks (W1, W2) relativ zu einer Referenzlinie (R);
- Einziehen des Werkstücks (W1, W2);
- Erfassen und/oder Auslesen von Daten betreffend die äußere Form des Werkstücks (W1, W2), insbesondere des Winkels wenigstens einer Seite (7) des Werkstücks (W1, W2) zur Referenzlinie (R);
- Transportieren des Werkstücks (W1, W2) mittels der Transporteinrichtung (31 - 34) in einer Vorschubrichtung (X) innerhalb einer Werkstücktransportebene (53) zu der Bearbeitungskopftragvorrichtung (4);
- Einstellen eines Schwenkwinkels der Supporttraverse (41) in Abhängigkeit von der zuvor ermittelten oder ausgelesenen Daten; und
- Einbringen einer Mehrzahl Bohrungen (6) entsprechend eines vorgegebenen Bohrmusters oder wenigstens einer Nut in das Werkstück (W1, W2) mittels des Bearbeitungskopfes (44).

## Claims

1. Woodworking device (1) for processing plate-type workpieces (W1, W2) of wood or wood substitutes, having
at least one processing head (44) wherein the processing head is a drilling head (44) with a plurality of drilling tools for simultaneously introducing a plurality of bore holes (6) into a workpiece (W1, W2) or a sawing head with a grooving saw for introducing a groove into a workpiece (W1, W2),
a supporting device (5), preferably a table (5), which is configured to support the workpieces (W1, W2),
a transport unit (31-34) which moves the workpieces (W1, W2) on the supporting device (5) along the feed direction (X) in a workpiece transport plane (53),
a processing head carrying device (4), preferably a portal (4), having a support crossbeam (41) which spans the at least one part of the workpiece transport plane (53) of the supporting device (5), preferably in a direction (Y, Z) transversely to the feed direction and on which the at least one processing head (44) is arranged,
wherein the support crossbeam (41) is mounted for pivotal movement about a real or imaginary pivot axis (A) running perpendicular to the feed direction (X) and perpendicular to the workpiece transport plane (53) of the workpiece (W1, W2).

2. Woodworking device (1) according to Claim 1
**characterised in**
**that** it has a control (2) which is configured to control at least one drive, or a plurality of drives, which activates the pivotal movement of the support crossbeam (41) about the pivot axis (A).

3. Woodworking device (1) according to Claim 1 or 2
**characterised in**
**that** the processing head (44) is mounted in displaceable manner along the support crossbeam (41) and/or the support crossbeam (41) is mounted in displaceable manner on a machine bed of the woodworking device (1) or on bearing crossbeams (47, 48) which are mounted immovable on the machine bed or opposite a support base.

4. Woodworking device (1) according to one of the preceding claims
**characterised in**
**that** the support crossbeam (41) has a main longitudinal extension direction which is measured such that the support crossbeam (41) spans the supporting device (5) up to at least 50%, preferably up to 70% and most preferably completely, preferably in a direction (Y, Z) transversely to the feed direction.

5. Woodworking device (1) according to one of the preceding claims
**characterised in**
**that** the processing head carrying device (4) is mounted behind a workpiece capture unit (8) which captures the exterior form of an incoming workpiece (W1, W2), in particular the angle of a narrow side (7) of the workpiece (W1, W2) to a predetermined reference line (R).

6. Woodworking device (1) according to Claims 2 and 5
**characterised in**
**that** the control (2) communicates with the workpiece capture unit (8) in such a way that the workpiece capture unit (8) forwards the exterior form of the workpiece (W1, W2) determined by it in the form of data to the control and the control in response to the data thus received determines a corresponding pivotal angle for the support crossbeam (41) and controls the drive so that the latter activates the pivotal movement of the support crossbeam (41) about the previously determined pivot angle about the pivot axis (A).

7. Woodworking device (1) according to one of the preceding claims
**characterised in**
**that** the processing head (44) is configured to move in the direction of the workpiece transport plane (53) or away from the latter, in particular in linear manner.

8. Woodworking device (1) according to one of the preceding claims **characterised in that** the processing head (44) is mounted secured against rotation on the support crossbeam (41).

9. Woodworking device (1) according to one of the preceding claims
**characterised in**
**that** the support crossbeam (41) is mounted in rotatable manner directly on a machine bed of the woodworking device (1) or directly on bearings mounted on the machine bed or a support base.

10. Woodworking device (1) according to one of the preceding claims
**characterised in**
**that** the support crossbeam (41) is capable of moving in relation to a neutral position, in which the main longitudinal extension direction of the support crossbeam (41) runs parallel to the transverse direction (Y) and perpendicular to the feed direction (X), in a first pivot direction or/and in a second pivot direction opposite the first pivot direction, about an angle in the range from greater than 0° to 10°, preferably up to 5° and most preferably up to 3°.

11. Method for operating a woodworking device (1) according to one of the preceding claims **characterised by** the following steps:
- delivering a workpiece (W1, W2) and transferring it to the supporting device (5), preferably by placing it down on a table of the supporting device (5);
- aligning the workpiece (W1, W2) relative to a reference line (R);
- drawing in the workpiece (W1, W2);
- capturing and/or reading data relating to the exterior form of the workpiece (W1, W2), in particular the angle of at least one side (7) of the workpiece (W1, W2) to the reference line (R);
- transporting the workpiece (W1, W2) by means of the transport unit (31-34) in a feed direction (X) within a workpiece support plane (53) to the processing head carrying device (4);
- adjusting a pivot angle of the support crossbeam (41) in dependence on the previously determined or retrieved data; and
- introducing a plurality of bore holes (6) according to a predetermined drilling pattern or at least a groove into the workpiece (W1, W2) by means of the processing head (44).

## Revendications

1. Dispositif de traitement du bois (1) pour traiter des pièces en forme de plaque (W1, W2) en bois ou des produits de substitution du bois, comprenant
au moins une tête de traitement (44), dans lequel la tête de traitement est une tête de forage (44) avec une pluralité d'outils de forage pour l'introduction simultanée d'une pluralité de forages (6) dans une pièce (W1, W2) ou est une tête de scie avec une scie à rainurer pour introduire une rainure dans une pièce (W1, W2),
un dispositif de support (5), de préférence une table (5), qui est conçu pour supporter les pièces (W1, W2),
un moyen de transport (31 - 34) qui déplace les pièces (W1, W2) à ou sur le dispositif de support (5) le long de la direction d'avance (X) dans un plan de transport de la pièce (53),
un dispositif de support de la tête de traitement (4), de préférence un portail (4), avec une traverse de support (41) enjambant au moins une partie du plan de transport de la pièce (53) du dispositif de support, de préférence dans une direction (Y, Z) transversalement à la direction d'avance, dans lequel l'au moins une tête de traitement (44) est agencée à la traverse de support (41),
dans lequel la traverse de support (41) est montée pivotante autour d'un axe de pivotement (A) réel ou imaginaire s'étendant perpendiculairement à la direction d'avance (X) et perpendiculairement au plan de transport de la pièce (53) (W1, W2).

2. Dispositif de traitement du bois (1) selon la revendication 1,
**caractérisé en ce**
**qu'**il comporte un dipositif de commande (2), qui est conçu pour commander au moins un entraînement ou une pluralité d'entraînements provoquant le pivotement de la traverse de support (41) autour de l'axe de pivotement (A).

3. Dispositif de traitement du bois (1) selon la revendication 1 ou 2,
**caractérisé en ce**
**que** la tête de traitement (44) est montée de manière à pouvoir être déplacé le long de la traverse de support (41) ou/et la traverse de support (41) est montée de manière à pouvoir être déplacé sur un banc de machine du dispositif de traitement du bois (1) ou sur le banc de machine ou des traverses de palier (47, 48) montées de manière immobile par rapport à un sol de montage.

4. Dispositif de traitement du bois (1) selon l'une quelconque des revendications précédentes,
**caractérisé en ce**
**que** la traverse de support (41) comporte une direction principale d'extension longitudinale, qui est calculée de telle sorte que la traverse de support (41) enjambe le dispositif de support (5), de préférence dans une direction (Y, Z) transversalement à la direction d'avance (X), à au moins 50 %, de préférence à 70 %, extrêmement préféré, complètement.

5. Dispositif de traitement du bois (1) selon l'une quelconque des revendications précédentes,
**caractérisé en ce**
**qu'**un dispositif de détection de la pièce (8) est en amont du dispositif de support de la tête de traitement (4), dans lequel le dispositif de détection de la pièce (8) détecte la forme extérieure d'une pièce (W1, W2) arrivant, surtout l'angle d'un petit côté (7) de la pièce (W1, W2) par rapport à une ligne de référence (R) donnée.

6. Dispositif de traitement du bois (1) selon la revendication 2 et 5,
**caractérisé en ce**
**que** le dipositif de commande (2) est en communication avec le dispositif de détection de la pièce (8) de telle sorte que le dispositif de détection de la pièce (8) transmet au dispositif de commande la forme extérieure déterminée de la pièce (W1, W2) sous forme de données, et le dipositif der commande (2) en répondant aux données ainsi reçues détermine un angle de pivotement correspondant pour la traverse de support (41) et commande l'entraînement de sorte que celui-ci provoque le pivotement de la traverse de support (41) autour de l'axe de pivotement (A) selon l'angle de pivotement déterminé préalablement.

7. Dispositif de traitement du bois (1) selon l'une quelconque des revendications précédentes,
**caractérisé en ce**
**que** la tête de traitement (44) est conçue de manière à pouvoir être déplacée, surtout linéairement, dans la direction du plan de transport de la pièce (53) ou orienté éloigné de celui-ci.

8. Dispositif de traitement du bois (1) selon l'une quelconque des revendications précédentes,
**caractérisé en ce**
**que** la tête de traitement (44) est montée de manière immobile à la traverse de support (41).

9. Dispositif de traitement du bois (1) selon l'une quelconque des revendications précédentes,
**caractérisé en ce**
**que** la traverse de support (41) est montée de manière rotative directement sur un banc de machine du dispositif de traitement du bois (1) ou directement aux paliers agencés au banc de machine ou à un sol de montage.

10. Dispositif de traitement du bois (1) selon l'une quelconque des revendications précédentes,
**caractérisé en ce**
**que** la traverse de support (41), par rapport à une mise à zero, dans laquelle la direction d'extension longitudinale principale (X) de la traverse de support (41) s'étend parallèlement à la direction transversale (Y) et perpendiculairement à la direction d'avance (X), dans une première direction de pivotement ou/et dans une deuxième direction de pivotement opposée à la première direction de pivotement, est pivotante autour des angles dans la plage de plus de 0° à 10°, préférablement jusqu'à 5°, extrêmement préféré jusqu'à 3°.

11. Procédé de fonctionnement d'un dispositif de traitement du bois (1) selon l'une quelconque des revendications précédentes, **caractérisé par** les étapes suivantes:
- déposer une pièce (W1, W2) et passer celle-ci au dispositif de support (5), de préférence en la posant sur une table du dispositif de support (5);
- aligner la pièce (W1, W2) par rapport à une ligne de référence (R);
- introduire la pièce (W1, W2);
- détecter et/ou lire des données concernant la forme extérieure de la pièce (W1, W2), surtout de l'angle de l'au moins un côté (7) de la pièce (W1, W2) par rapport à la ligne de référence (R);
- transporter la pièce (W1, W2) par l'intermédiaire du moyen de transport (31 - 34) dans une direction d'avance (X) dans un plan de transport de la pièce (53) au dispositif de support de la tête de traitement (4);
- ajuster un angle de pivotement de la traverse de support (41) en fonction des données déterminées ou lues préalablement; et
- introduire une pluralité de forages (6) selon un modèle de forage donné ou au moins une rainure dans la pièce (W1, W2) par l'intermédiaire de la tête de traitement (44).
